# EUROPEAN PATENT APPLICATION

(11) **EP 1 271 876 A1**
(43) Date of publication of application: **02.01.2003**
(21) Application number: 01202433.7
(22) Date of filing: 25.06.2001
(51) Int. Cl.: H04L 29/06

(54) **Transmitting device and method of enhanced rendering**

(71) Applicant: Koninklijke Philips Electronics N.V., 5621 BA Eindhoven (NL)
(72) Inventor: The designation of the inventor has not yet been filed
(74) Representative: Steenbeek, Leonardus Johannes

(57) **Abstract**

A transmitting device (104) comprising rendering means (202) for rendering a content item (116), coupled to output means (105) for outputting the rendered content item (120) towards a receiving device (130), characterized by embedding means (113) for embedding a position of the transmitting device (104) in the content item (116) before outputting the content item (116). Also a method of enhanced rendering of the content item (116).

## Description

The invention relates to a transmitting device comprising rendering means for rendering a content item, coupled to output means for outputting the rendered content item towards a receiving device.

The invention further relates to a method of enhanced rendering of a content item, comprising rendering the content item, and outputting the rendered content item towards a receiving device.

Recent years have seen a great increase in subscribers world-wide to mobile telephone networks and, through advances in technology and the addition of functionalities, mobile telephones have become personal, trusted devices. A result of this is that the mobile information society is developing with personalized and localized services becoming increasingly more important. Such "context-aware" (CA) mobile telephones communicate with low power, short range beacons in places like shopping malls, air ports, hotels and so on to provide location specific information. This information might include local maps, information on nearby shops and restaurants, last-minute updates on flights and departure gates and so on. The user's CA terminal may be equipped to filter the information received according to pre-stored user preferences and the user is only alerted if a piece of information of particular interest has been received.

The beacons typically operate using a communication technology such as Bluetooth™. Bluetooth provides for both a direct communication between a beacon and a terminal, as well as a broadcast mode in which the beacon broadcasts information that can e received by any terminal within a certain range. The transmission range of a Bluetooth beacon is in the order of ten meters. Since this range is relatively small, a receiving device that picks up the transmission can use the positioning information therein as if it were its own position.

The beacon may provide more information than just its location, so that the receiving device can directly use this information, for example by presenting it to the user. In a shopping mall, for example, a shop could broadcast advertisements or special offers to passers by to attract their attention. The beacon could also distribute only the location information. A receiving device then picks up this information, determines its own position from the received information and contacts a central server. The receiving device then supplies the position information to the central server and receives localized information in return.

Using this arrangement an airport could install beacons that broadcast their position and various locations. A traveler who needs to catch a flight at that airport programs the departure gate in his mobile phone, and has a drink, or goes shopping to kill the time until his plane departs. When it is time to check in, he activates his mobile phone, which determines its present position by receiving a transmission from one of the beacons, and contacts the central server to ask for directions. The server then replies with instructions such as "exit the restaurants and turn left, then walk 200 meters and turn right", which the mobile phone receives and displays to the user.

The possibilities of context-aware services in combination with beacons and mobile phones are virtually endless. However, they require an infrastructure with beacons, and often also with central application service. This makes the deployment of the necessary infrastructure costly and complex. For one thing, an entity wishing to provide a context-aware service either needs to deploy his own beacon infrastructure or pay another provider for access on that provider's infrastructure. Since there is not a single business entity that provides all the necessary interconnections to all of the access points, many contracts with different entities will need to be closed to provide even marginal coverage for the new service. Each of the contracts needs negotiation on initial investments, installation, revenue sharing, quality of service, maintenance and liability. In addition, context-aware mobile phone applications using this mechanism presume the support of Bluetooth in mobile phones. This would exclude large installed bases of (legacy) mobile phones from the service.

It is an object of the invention to provide a transmitting device according to the preamble, which can also function as a positioning device.

This object is achieved according to the invention in a transmitting device which is characterized by embedding means for embedding a position of the transmitting device in the content item before outputting the content item.

The invention is based on the insight that most of the locations in which location-specific services are desirable already have an infrastructure with good coverage of the area, namely its audio broadcasting system. An airport, for example, already has a network of speakers with which the latest changes in departure and arrival gates is announced. Supermarkets typically have broadcasting systems for playing background music. By distributing the position of the transmitting device over this infrastructure, the necessity of having a complex beacon infrastructure is reduced.

In an embodiment the embedding means are arranged for embedding the position of the transmitting device in a first watermark in the content item. While there are many different techniques available for embedding information in a content item such as a background audio broadcast, using watermarking technologies is particularly advantageous. A watermark can be embedded in a content item at any moment, making it easier to modify the audio broadcasting infrastructure to allow it to distribute position information. Further, watermarked transmission can be picked up by a receiving device even after transmission "over the air" (for audio e.g. over the acoustical channel) whereas technologies such as RDS or teletext cannot.

In a further embodiment, the embedding means are further arranged for embedding a second watermark, indicative of the presence of the first watermark in the content item. Detecting a watermark comprising position information can be a complex affair. Since the receiving device is typically a mobile device such as a mobile phone, the processing capacities in the receiving device will typically be limited. To overcome this problem, the receiving device could record a portion of the transmission and supply it to a central server, which detects the watermarked position information and sends that back to the receiving device.

However, the watermark may not be present at all times. This would mean that the receiving device needlessly records a portion of the content item and supplies this to the central server. To this end, the transmitting device embeds a second watermark in the content item. This watermark should be easy to detect even on a mobile receiving device with limited processing capabilities. If the receiving device then detects this second watermark, it know that position information is present, and it can contact the server to obtain this information.

In a further embodiment the transmitting device further comprises storage means for storing the position of the transmitting device. In a location such as a supermarket, the audio broadcasting system typically is arranged to broadcast one content item via multiple transmitting devices. However, the location information necessary to supply the location specific services often need to be more specific than "you are in the supermarket". To this end, each individual transmitting device can be provided with storage means in which the position of that specific transmitting device can be entered. The position could be programmed in manually, or be retrieved using a network connection to a central server.

In a further embodiment the transmitting device comprises a position receiver for determining the position of the transmitting device. Preferably, the position receiver as a Global Positioning System (GPS) receiver. When the transmitting device is moved around frequently, and/or a precise location is desirable, a GPS receiver provides a flexible and accurate way of determining the position of the transmitting device. Alternatively, the position receiver is a Bluetooth receiver arranged for receiving positioning information from a Bluetooth transmitter, such as a central server.

In a further embodiment the output means are arranged for broadcasting the rendered content item. Broadcasting has the advantage that any receiving device within a certain range can pick up the rendered content item as it is being output.

In a further embodiment the embedding means are arranged for embedding the position information when the content item is related to a specific location. For example, in an airport the position information could be embedded when an announcement is made about a change in a departure gate for a particular flight. This way, the traveler only receives position information when he needs it, and so is not distracted by unwanted offerings.

It is an object of the invention to provide a method according to the preamble, which can also function as a positioning method.

This object is achieved according to the invention in a method which is characterized by embedding a position of a transmitting device in the content item before outputting the content item

These and other aspects of the invention will be apparent from and elucidated with reference to the embodiments shown in the drawing, in which:
Figure 1 schematically shows a first embodiment of an arrangement comprising a transmitting device and a receiving device; and
Figure 2 schematically shows a second embodiment of an arrangement comprising a transmitting device and a receiving device.

Throughout the figures, same reference numerals indicate similar or corresponding features. Some of the features indicated in the drawings are typically implemented in software, and as such represent software entities, such as software modules or objects.

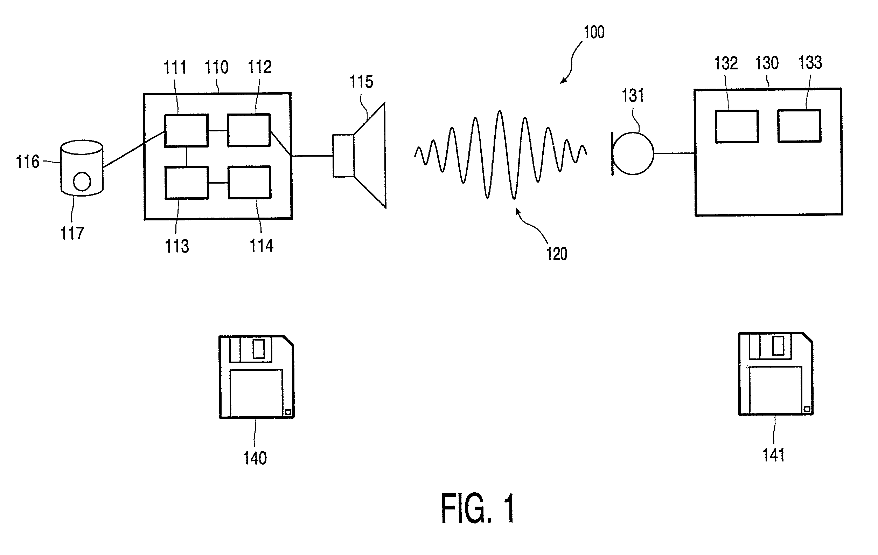

Figure 1 schematically shows an arrangement 100 comprising a transmitting device 110 and a receiving device 130. The transmitting device 110 is arranged to transmit content item 116 to the receiving device 130. The content item 116 is for instance a television program, a radio program, a movie, an advertisement, a picture or a sound or a portion thereof.

The rendering module 112 receives a selection of the content item 116 and generates a signal representing the content item 116. The content item 116 may need to be read from a storage unit 117. This storage can be a tape or a disk such as a DVD or Video CD. It can also be received from an external source, such as the Internet, a satellite feed or home network.

The rendering module 112 is coupled to an output module 115, which generates an output signal 120, which preferably is an audio signal. The output module 115 then transmits, preferably by broadcast, the output signal 120 towards the receiving device 130.

In accordance with the invention, the transmitting device 110 comprises an embedding module 111. The embedding module 111 embeds a position of the transmitting device 110 in the content item 116 before it is output by the output module 115. While the embedding module 111 is shown in Figure 1 as being positioned before the rendering module 112, the embedding module 111 can of course also be positioned between the rendering module 112 and the output module 115.

In a preferred embodiment, the embedding module 111 embeds the position information by generating a first watermark comprising the position information, and inserting that in the content item 116, using any kind of watermarking or other steganographic technique appropriate for the content item 116.

Optionally, the embedding module 111 further embeds a second watermark indicative of the presence of the first watermark, in the content item 116. The second watermark should be easier to detect than the first watermark, so that it can be detected quickly even by portable devices having little processing power.

The embedding module 111 of course first needs to know the position of the transmitting device 110. The transmitting device 110 can be provided with a storage module 113 in which to store the information, so that the embedding module 111 can read it therefrom. The position information can be obtained in various ways.

In one embodiment, an operator who installs the transmitting device 110 in a particular location also determines the position of the particular location, and enters this information manually into the storage module 113. In another embodiment, the transmitting device 110 can be connected to a network (not shown), and be fed position information over the network.

The transmitting device 110 may also be provided with a position receiver 114, preferably a Global Positioning System (GPS) receiver. The GPS receiver 114 receives position information and stores the received position information in the storage module 113. This is particularly useful when the position of the transmitting device 110 changes frequently, for example in case the transmitting device 110 is installed in a train or in a shopping cart.

Alternatively, the position receiver 114 is a Bluetooth receiver arranged for receiving positioning information from a Bluetooth transmitter, such as a central server. This way, it becomes possible to integrate the above arrangement with a Bluetooth-based arrangement, so that the context-aware services can be provided to both Bluetooth-enabled devices and (legacy) devices served by the transmitter according to the invention.

The receiving device 130 comprises receiving module 131, decoding module 132 and executing module 133. The receiving module 131 receives the signal 120 and feeds it to the decoding module 131. The receiving module 131 can be for instance a microphone, a camera or a light sensitive sensor of some kind.

The decoding module 131 obtains the content item 116 from the signal 120. Typically receiving and decoding comprises converting the signal 120 back into a representation similar to the one used in the transmitting device 110. The decoding module 131 then processes the content item 116 to obtain the position information embedded therein.

The transmitting device 110 can be realized as a computer program product 140 being arranged for causing a processor to execute the method described above. The computer program product 140 enables a programmable device when executing said computer program product to function as the transmitting device 110. Similarly, the receiving device 130 can be realized as a computer program product 141 enabling a programmable device when executing said computer program product to function as the receiving device 130.

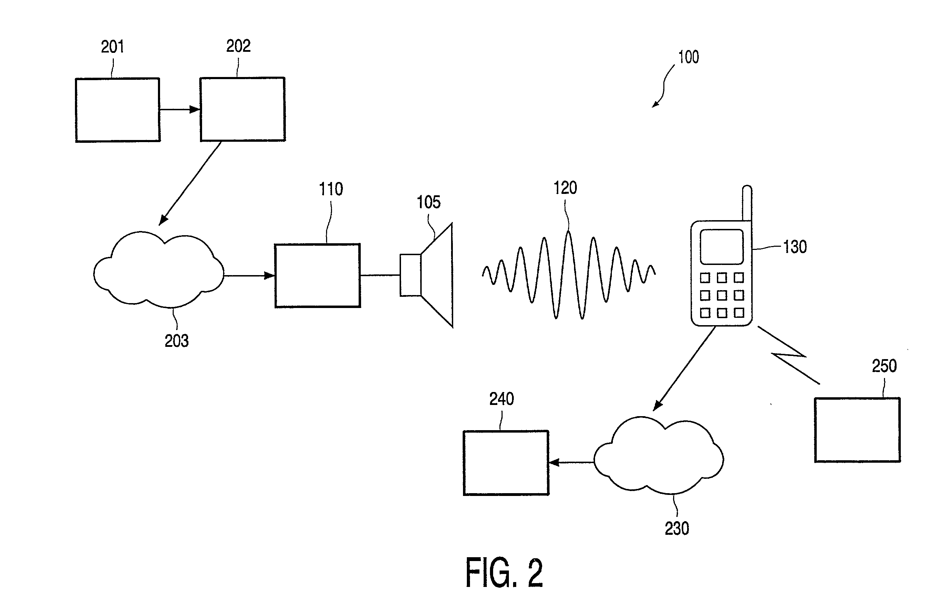

Figure 2 schematically shows a second embodiment of the arrangement 100. In this embodiment, the transmitting device 110 is part of a broadcast chain which further comprises a content provider 201, a distributor 202 and a network 203. Instead of receiving the content item 116 from a local storage 117, the transmitting device 110 now receives the content item 116 from the content provider 201, using the distribution network 203 managed by the distributor 202 as a transmission path.

For example, the content provider 201 can be a radio station, which distributes radio programs and music via distributor 202 over cable network 203 to a radio 110, which plays the radio programs and music so that people can hear them via loudspeaker 105.

There may be more than one transmitting device 110 connected to the distribution network 203. These transmission systems then may, but need not, receive the same content item from the distribution network 203. In the case that the transmitting device 110 is part of a public address system, then it is very likely that they will all output the same content item. However, this is not important for the invention.

As explained above, the output signal 120 as outputted by the output module 105 comprises embedded information on the position of the transmitting device 110. The receiving device 130 can pick up the output signal 120, detect the embedded information and obtain it by processing the signal 120.

However, receiving device such as mobile phones, personal digital assistant and the like will only have limited processing capabilities and power. It is then advantageous to provide a supporting server 250, which can detect and extract embedded information in the signal 120.

The receiving device 130 then provides a portion of the signal 120 to the supporting server 250, and receives the extracted information in return a few seconds later. In the case of a mobile phone, this can be realized simply by dialing a certain telephone number, which establishes a connection with the supporting server 250, and using the mobile phones microphone to record the portion of the signal 120. The recorded portion is then transmitted over the telephone connection to the supporting server 250. The supporting server 250 can then process the portion to obtain the information and send it back, e.g. as a nicely formatted SMS message.

After having extracted the location information from the signal 120, the receiving device 130 can communicate with an e-commerce server 240 using a network 230 of some kind. For instance, if the receiving device 130 is a mobile phone, the network 230 is the mobile network coupled to a network such as the internet, allowing the mobile phone to connect the servers such as e-commerce server 240 on the internet.

The supporting server 250 may alternatively supply the extracted position information directly to the e-commerce server 240, rather than supplying it back to the receiving device 130. In fact, the supporting server 250 and the e-commerce server 240 may be one and the same entity. This way, the user of the receiving device 130 is provided with transparent access to the location specific services offered by the e-commerce server 240. Upon calling the special telephone number, the receiving device 130 then receives localized information or gets accessed to localized services.

The receiving device 130 may continuously process received signals 120 in order to detect embedded position information. However, this results in a heavy penalty in power consumption, which is undesirable especially from mobile devices. As mentioned above, the transmitting device 110 may have embedded a second watermark indicative of the present of the first watermark in the content item 116 before outputting it as the signal 120. This second watermark is easier to detect and than the first watermark. It need not carry a payload, as its only purpose is to serve as an indication that a first watermark comprising position information is embedded in the signal 120. The receiving device 130 can then check for the presence of the second watermark at a relatively low performance hit.

Alternatively, the receiving device 130 may be arranged to only detect and process the signal 120 when the user explicitly activates this option. To this end, there could be provided a special button (not shown) on the receiving device 130. In such a case it is necessary to provide a visible or audible cue to the user that position related information is available for use with localized services. This cue could be, for example, related to the type of content that is being output. For example, in an airport, announcement relating to departures or arrivals of flights could be provided with embedded position information. A user would then know to activate this function in his receiving device 130 when the announcement relates to his flight.

To illustrate the principles behind the invention some example embodiments of the invention as put to practice are given below.

Example 1: John is waiting in the lobby of Eindhoven Hilton, and knows that the background music carries a watermark. He dials on his regular GSM the phone number of the supporting server 250. This number may have been preprogrammed in his GSM phone. John then puts the phone at his ear. When connected, the supporting server 250 picks up an audio fragment as received through the phone's microphone, even when the microphone is not directed towards the loudspeaker. After processing the audio fragment and recognizing the watermark, the supporting server 250 determines from the embedded position information that John is in the Eindhoven Hilton. The server then connects John to an automated system that provides him by voice various options, such as (1) automatic check out, (2) order a taxi, and (3) make a reservation for the restaurant in the Eindhoven Hilton. By pressing touch tone keys on his telephone, John can make a selection. Note that for this example, no modifications to John's mobile phone are necessary.

Example 2: Again, John is waiting in the lobby of Eindhoven Hilton, and knows that the background music carries a watermark. He dials on his regular GSM/WAP phone the number of the server 250, and this time keeps the phone in front of his eyes. Using the same steps as in the previous example, the server 250 determines that John is in the Eindhoven Hilton. It then supplies a WAP page to John's phone, which offers him the same options as in the previous example.

Example 3: John is now at Eindhoven Airport (having presumable chosen the option to order a taxi), but doesn't know that the background sound at the airport also carries a watermark. However, on the way to the airport, John bought a new mobile phone with more advanced processing capabilities. Since the new phone is GPRS-enabled, it now is possible to regularly send an audio sample to the server 250, for example every 10 minutes a five second audio sample.

The phone may also measure the average noise level, and only supply an audio fragment to the server 250 when the current noise level significantly exceeds the average. This way, the phone only triggers on announcement and not on background music.

As a consequence, the server 250 now always knows, roughly speaking, where John is. John now accesses a localized service offered by the server 240, and immediately gets a WAP page that is specific to his present location as determined by the server 250. For example, he may be provided with an automatic check in option for his flight, with flight departure information at his terminal, or the text of the most recent speaker announcement.

Of course, the receiving device 130 does not have to be a mobile phone, and the extracting of the position information does not need a supporting server 250. The receiving device 130 embodied as a laptop has sufficient power in itself to detect the extra information and extracted from the signal 120.

The information embedded in the content item 116 can be more than just the position of the transmitting device 110. It may also comprise an internet address for the e-commerce server 240, or other information that could be useful with the localized service(s) offered by the server 240.

## Claims

1. A transmitting device (104) comprising rendering means (202) for rendering a content item (116), coupled to output means (105) for outputting the rendered content item (120) towards a receiving device (130), **characterized by** embedding means (113) for embedding a position of the transmitting device (104) in the content item (116) before outputting the content item (116).

2. The transmitting device (104) as claimed in claim 1, whereby the embedding means (113) are arranged for embedding the position of the transmitting device (104) in a first watermark in the content item (116).

3. The transmitting device (104) as claimed in claim 2, whereby the embedding means are further arranged for embedding a second watermark, indicative of the presence of the first watermark, in the content item.

4. The transmitting device (104) as claimed in claim 1, comprising storage means (203) for storing the position of the transmitting device (104).

5. The transmitting device (104) as claimed in claim 1, comprising a position receiver (204) for determining the position of the transmitting device.

6. The transmitting device (104) as claimed in clamim 1, whereby the output means (105) are arranged for broadcasting the rendered content item.

7. The transmitting device (104) as claimed in claim 1, whereby the embedding means (201) are arranged for embedding the position information when the content item is related to a specific location.

8. A method of enhanced rendering of a content item (116), comprising rendering the content item (116), outputting the rendered content item (120) towards a receiving device (130), **characterized by** embedding a position of a transmitting device (104) in the content item (116) before outputting the content item (116).
